# EUROPÄISCHE PATENTSCHRIFT

(11) **EP 1 580 065 B1**
(45) Veröffentlichungstag und Bekanntmachung des Hinweises auf die Patenterteilung: **17.02.2016**
(21) Anmeldenummer: 05101976.8
(22) Anmeldetag: 14.03.2005
(51) Int. Cl.: B60N 2/07, B60N 2/22, B60N 2/48

(54) **FAHRZEUGSITZ FÜR STAPELFAHRZEUGE**
VEHICLE SEAT FOR LIFT TRUCK
SIÈGE DE VÉHICULE POUR CHARIOT ÉLÉVATEUR

(30) Priorität: 22.03.2004 DE 102004014333
(43) Veröffentlichungstag der Anmeldung: 28.09.2005
(73) Patentinhaber: GRAMMER AG, 92224 Amberg (DE)
(72) Erfinder: Ott, Richard, 92245 Kümmersbruck (DE); Meiller, Hermann, 92533 Wernberg-Köblitz (DE); Haller, Nikolaus, 92260 Ammerthal (DE)
(74) Vertreter: Hannke, Christian

(56) Entgegenhaltungen:
- DE-A1- 19 612 979
- FR-A- 2 285 260
- JP-A- 9 202 167
- US-A- 1 414 637
- US-A- 6 135 412
- US-B1- 6 336 619
- US-B1- 6 450 578

## Beschreibung

Die Erfindung betrifft einen Fahrzeugsitz für Stapelfahrzeuge, die einen Hubmast mit einem daran angebrachten auf- und abwärtsbewegbaren Lasttragemittel umfassen, wobei der Fahrzeugsitz eine Sitzplatte und eine neigbare Rückenlehne aufweist, gemäß dem Oberbegriff des Patentanspruches 1.

Bei Stapelfahrzeugen, insbesondere Hochregalstaplern, ist die Blickrichtung des bedienenden Fahrers in Abhängigkeit von der momentanen Höhenposition des Lasttragemittels unterschiedlich. Der Fahrer muss während eines Sich Fortbewegens des Fahrzeuges im Wesentlichen horizontal blicken. Wird hingegen das Lasttragemittel zur Aufnahme oder Ablage einer Last in einem Hochregal nach oben bewegt, muss der Fahrer seinen Kopf nach hinten legen und das Gesicht nach oben wenden, um den Aufnahme- bzw. Ablagevorgang ausreichend genau mit dem Auge verfolgen zu können. Eine derartige Kopfstellung des Fahrers ist ergonomisch ungünstig und somit für den Fahrer unbequem.

Aus DE 195 24 319 C2 ist ein Stapelfahrzeug mit einem Fahrzeugsitz bekannt, dessen Bedienerkabine mitsamt dem Fahrzeugsitz um eine horizontale Achse schwenkbar in einem Rahmen des Fahrzeuges gelagert ist, so dass die Blickrichtung des Fahrers durch Verschwenken der gesamten Bedienerkabine verändert werden kann. Derartige Stapelfahrzeuge weisen eine aufwändige Konstruktion auf, da eine Schwenkmechanik zum Verschwenken einer derartigen Drehkabine und starke Antriebsmotoren hierfür erforderlich sind. Zudem ist ein derartiger Aufbau kostenintensiv in seiner Herstellung.

Aus EP 0 543 791 A1 ist ein Fahrzeugsitz für Stapelfahrzeuge bekannt, der gegenüber einem Rahmen des Stapelfahrzeuges mit seiner Sitzplatte in horizontaler Richtung verschiebbar ist. Zudem kann die Rückenlehne durch eine derartige Verschiebebewegung geneigt werden.

Ein derartiger Fahrzeugsitz ist mittels an der Rückseite der Rückenlehne und der Unterseite der Sitzplatte angebrachten Sitzhalteelementen derart an dem Stapelfahrzeug direkt angebracht, dass in eine schlitzartige Öffnung, die in den Halteelementen jeweils angeordnet ist, ein an dem Fahrzeug direkt angebrachter Zapfen jeweils eingreift, um die schlitzartige Öffnung entlang des Zapfens zu verschieben. Auf diese Weise wird der Sitz auf einer vorbestimmten Bahn mittels der schlitzartigen Öffnungen verschoben und geneigt. Derartige Fahrzeugsitze erfordern das zusätzliche Anbringen der Zapfen an dem Stapelfahrzeug selbst und deren genaue Ausrichtung gegenüber den schlitzartigen Öffnungen.

Die Druckschrift FR 2 285 260 A offenbart einen Fahrzeugsitz, dessen Sitzteil und Rückenlehne über ein Gelenk miteinander verbunden sind. Das Sitzteil ist mittels Rollen auf einer Schiene rollend gelagert, während die Rückenlehne über eine am Rückenlehnenrahmen angeordnete Führungseinrichtung in vertikaler Richtung verschieblich gelagert ist.

Die Druckschrift US 1 414 637 A zeigt einen Sitz bzw. Stuhl, bei dem die Neigung der Rückenlehne abhängig ist von der Position des in Längsrichtung des Sitzes verschiebbar gelagerten Sitzteils.

Gemäß der Druckschrift JP 09 202167 A ist ein Sitz gezeigt, welcher ein gegenüber einem Grundrahmen verschwenkbares Sitzteil sowie eine dazu verschwenkbar angeordnete Rückenlehne zeigt. Des Weiteren sind Sitze gezeigt, die direkt an einer Fahrzeugwandung angeordnet sind.

Eine zusätzliche Verstellung bzw. Längsverstellung des gesamten Sitzes unabhängig von der Neigung der Rückenlehne ist allerdings bei keiner der obigen Druckschriften möglich.

Der gemäß der Druckschrift US 6 135 412 A gezeigte Sitz ist für Gartentraktoren geeignet und sowohl höhenverstellbar als auch hinsichtlich der Längsrichtung verschiebbar; allerdings können die Sitzkontur und insbesondere die Neigung der Rückenlehne gegenüber dem Sitzteil nicht verstellt werden.

Der Fahrzeugsitz für Löffelbagger gemäß Druckschrift DE 196 12 979 A weist ein Sitzgrundgestell auf, welches in Kabinen einbaubar ist. Er weist eine Dreheinrichtung zur Drehung des Sitzes um die Höhenachse sowie eine Gleitlagereinrichtung zum Längsverschieben des Sitzes auf. Auch hier ist eine Sitzlängsverstellung, welche zeitgleich mit einer Neigungsänderung der Rückenlehne einhergeht, nicht offenbart.

Dies gilt auch für die US 6 336 619 B1, die eine Sitzplattform für landwirtschaftliche oder industrielle Fahrzeuge zeigt, welche eine in Fahrzeuglängsrichtung verschiebbare Gleiteinrichtung aufweist.

Die US 4 890 887 A zeigt einen Fahrzeugsitz für Stapelfahrzeuge nach dem Oberbegriff des Anspruchs 1, mit einem Rahmen, einer Sitzplatte und einer neigbaren Rückenlehne, welche mittels eines Verbindungselements am Rahmen vertikal verschieblich gelagert ist. Die Sitzplatte ist mittels mit dem Rahmen verbundenen Verstellelementen zeitgleich mit einer Neigung der Rückenlehne horizontal verschiebbar. Zwischen Sitzteilrahmen und Stapelfahrzeug sind Gleitschienen angeordnet.

Ähnlich dazu zeigt die US 4 687 250 A ebenfalls einen Fahrzeugsitz mit Sitzteil und Rückenlehne, welche an einem Stützrahmen montiert sind. Auch hier ist das Sitzteil mittels einer Anordnung aus Bolzen und Langloch zeitgleich mit einer Neigung der Rückenlehne horizontal verschiebbar angeordnet.

Demzufolge liegt der vorliegenden Erfindung die Aufgabe zugrunde, einen Fahrzeugsitz für Stapelfahrzeuge zur Verfügung zu stellen, der eine Veränderung der Blickrichtung des bedienenden Fahrers unter Beibehaltung eines hohen Sitzkomforts erlaubt und dessen Ein- und Ausbau in und aus dem Stapelfahrzeug einfach durchführbar ist.

Diese Aufgabe wird gemäß den Merkmalen des Patentanspruches 1 gelöst.

Kerngedanke der Erfindung ist, dass ein Fahrzeugsitz für Stapelfahrzeuge, die einen Hubmast mit einem daran angebrachten auf- und abwärtsbewegbaren Lasttragemittel umfassen, wobei der Fahrzeugsitz eine Sitzplatte und einen neigbare Rückenlehne aufweist, zusätzlich einen vom Stapelfahrzeug lösbaren Rahmen mit einem sich hinter der Rückenlehne im Wesentlichen vertikal erstreckenden ersten Abschnitt und einem sich unterhalb der Sitzplatte im Wesentlichen horizontal erstreckenden zweiten Abschnitt aufweist. Ein im oberen Bereich der Rückenlehne angeordnetes Verbindungselement ist an dem ersten Abschnitt entlang dessen Erstreckungsrichtung zum Neigen der Rückenlehne verschiebbar gelagert und die Sitzplatte ist mittels mit dem zweiten Abschnitt verbundenen ersten Gleitschienen zeitgleich mit der Neigungsbewegung der Rückenlehne in Horizontalrichtung verschiebbar. Der zweite Abschnitt des Rahmens weist zwei parallel zueinander verlaufende zweite Rohrrahmenabschnitte auf, die mit an dem Stapelfahrzeug angeordneten zweiten Gleitschienen gleitend verbunden sind. Die ersten Gleitschienen sind an einer Unterseite der Sitzplatte angeordnet und gleitend bewegbar auf den zweiten Rohrrahmenabschnitten des Rahmens, wobei die zweiten Rohrrahmenabschnitte mit dem gesamten Fahrzeugsitz von einem plattenartig ausgebildeten Element getragen sind, welches an seinen links- und rechtsseitigen Randbereichen derart ausgebildet ist, dass die zweiten Gleitschienen, welche auf dem Stapelfahrzeug befestigt sind, umfasst sind, und wobei in den Randbereichen das plattenartig ausgebildete Element auf den zweiten Gleitschienen aufliegt und außerhalb der Randbereiche die ersten Gleitschienen auf dem plattenartigen ausgebildeten Element aufliegen. Ein derartiger Fahrzeugsitz kann aufgrund des eigenen Rahmens, dessen erster Abschnitt vorzugsweise als U-förmiger erster Rohrrahmenabschnitt ausgebildet ist, als gesamte Einheit schnell und einfach in ein Stapelfahrzeug ein- und aus diesem ausgebaut werden.

Eine Synchronisation der Neigungsbewegung der Rückenlehne mit der Verschiebungsbewegung der Sitzplatte wird aufgrund einer Wechselwirkung zwischen dem Verbindungselement und dem ersten Abschnitt des Rahmens sowie einer Wechselwirkung zwischen den ersten Gleitschienen und dem zweiten Abschnitt des Rahmens auf einfache, reparaturunanfällige und komfortable Weise erreicht, ohne dass hierfür eine zusätzliche Bewegung eines Fahrzeugsitzteiles gegenüber dem eigentlichen Stapelfahrzeug erforderlich ist. Dies ermöglicht ein schnelles Auswechseln des gesamten Fahrzeugsitzes bei Vorliegen einer nichtfunktionierenden Synchronisation der Rückenlehnenneigung und der Sitzplattenverschiebung, ohne dass hierfür das Stapelfahrzeug für längere Zeit ausfällt und gegebenenfalls in eine Werkstatt gebracht werden muss.

Gemäß einer bevorzugten Ausführungsform ist das Verbindungselement als auf oder in dem ersten Rohrrahmenabschnitt abrollbare Rollen, die an einer Rückseite der Rückenlehne drehbar befestigt sind, ausgebildet. Sofern der erste Rohrrahmenabschnitt in seiner U-Form zwei parallel zueinander ausgerichtete sich im Wesentlichen vertikal erstreckende Rohrabschnitte aufweist, kann auf einfache Weise durch Anordnen einer rückenlehnenlinks- und -rechtsseitigen Rolle eine einfach Ausgestaltung des Verbindungselementes erhalten werden.

Der zweite Abschnitt des Rahmens weist wie beschrieben zwei parallel zueinander verlaufende zweite Rohrrahmenabschnitte auf, die mit an dem Stapelfahrzeug angeordneten zweiten Gleitschienen gleitend verbunden sind. Somit kann der zweite Abschnitt des Rahmens zusätzlich zu einer mittels der ersten Gleitschienen durchgeführten Gleitbewegung eine weitere Gleitbewegung gegenüber dem Stapelfahrzeug durchführen, um vorrangig eine Anfangsverschiebeposition des gesamten Fahrzeugsitzes in Abhängigkeit von der Beinlänge und gewünschten Bedienungsposition des bedienenden Fahrers einzustellen.

Ebenso kann eine Anfangsschwenkposition der Rückenlehne gegenüber der Sitzplatte mittels eines Betätigungselementes, das an zwei beidseitig des Fahrzeugsitzes angeordneten Schwenkverbindungselementen zum Verbinden der Rückenlehne mit der Sitzplatte angeordnet ist, eingestellt werden. Im Anschluss an die Einstellung derartiger Anfangsverschiebeund Anfangsschwenkpositionen findet dann bei einer gewünschten Veränderung der Blickrichtung des Fahrers die synchronisierte Rückenlehnenneigungs- und Sitzplattenverschiebungsbewegung statt.

Die zweiten Rohrrahmenabschnitte sind dabei auf einem zumindest abschnittsweise plattenartig geformten Element angeordnet, welches mit seinem linken und rechten Randbereich an den zweiten Gleitschienen gelagert ist.

Die ersten Gleitschienen sind wiederum an einer Unterseite der Sitzplatte befestigt und liegen auf den zweiten Rohrrahmenabschnitten auf.

Gemäß einer bevorzugten Ausführungsform kann das Verbindungselement als Gleitelemente, wie beispielsweise Nutensteine, zum Gleiten innerhalb an dem ersten Abschnitt des Rahmens angeordneten dritten Gleitschienen ausgebildet sein. Die dritten Gleitschienen weisen in diesem Fall einen den Nutenstein umfassenden U-förmigen Querschnitt auf.

Gemäß einer hier nicht beanspruchten Weiterbildung der Erfindung weist der Rahmen in dem oberen Bereich seines ersten Abschnittes eine auf- und abwärtsbewegbare Nackenstütze zur Stützung des Nackens des Fahrers oder eine Kopfstütze zur Stützung des Kopfes des Fahrers beim Nachhintenneigen der Rückenlehne auf. Somit kann der Fahrer bei einer starken Nachhintenneigung der Rückenlehne seinen Nacken bzw. seinen Kopf bequem ablegen.

Die Stütze ist gemäß einer hier nicht beanspruchten Ausbildungsform vorzugsweise mittels eines Bedienungselementes in mechanischer oder elektrischer Weise höhenverstellbar.

Die Rückenlehne ist vorzugsweise um eine Winkel von max. 20° nach hinten neigbar. Durch eine entsprechende Ausbildung der Nacken- bzw. Kopfstütze und gegebenenfalls deren zusätzliche Verschwenkung kann der Kopf des Fahrers um weitere 10° nach hinten geneigt werden, so dass ein maximaler Halswinkel gegenüber der Vertikalen von 30° entsteht. Bei einer derartigen Position des Fahrers und dessen Kopfes schließt ein nach oben gerichteter Blickwinkel des Fahrers einen Winkel von 60° ein. Sofern zusätzlich der maximale Neigungswinkel der Rückenlehne von 20° mitberücksichtigt wird, kann der Fahrer einen Blickwinkelbereich von max. 80° mit seinen Augen abdecken.

Weitere bevorzugte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1a: in einer Seitenansicht ein Ausschnitt eines Stapelfahrzeuges mit einem erfindungsgemäßen Fahrzeugsitz in ungeneigter Stellung;
- Fig. 1b: in einer Seitenansicht ein Ausschnitt eines Stapelfahrzeuges mit einem erfindungsgemäßen Fahrzeugsitz in geneigter Stellung;
- Fig. 2: in einer Seitenansicht den Fahrzeugsitz in ungeneigter Stellung gemäß einer Ausführungsform der Erfindung;
- Fig. 3: in einer Seitenansicht den Fahrzeugsitz in geneigter Stellung gemäß der Ausführungsform der Erfindung;
- Fig. 4: in einer Vorderansicht einen Ausschnitt des Fahrzeugsitzes gemäß der Ausführungsform der Erfindung;
- Fig. 5a: eine Querschnittsansicht entlang der Linie A- - -A aus Fig. 4 mit einem Verbindungselement gemäß einer Ausführungsform der Erfindung; und
- Fig. 5b: eine Querschnittsansicht entlang der Linie A- - -A aus Fig. 4 mit einem Verbindungselement gemäß einer weiteren Ausführungsform der Erfindung.

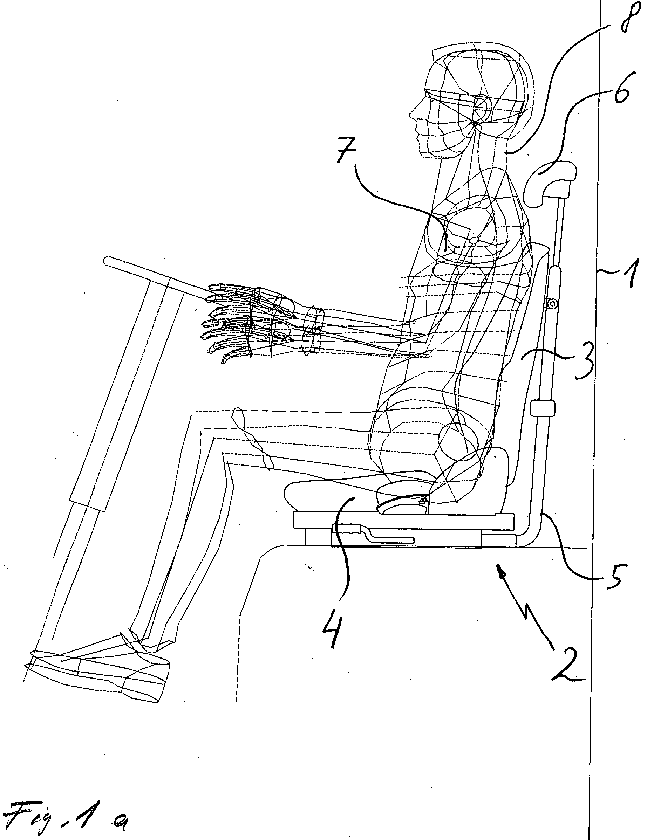

In Fig. 1a wird in einer Seitenansicht ein Stapelfahrzeug 1 mit einem darin angeordneten erfindungsgemäßen Fahrzeugsitz 2 gezeigt. Der Fahrzeugsitz 2 setzt sich aus einer Rückenlehne 3 und einer Sitzplatte 4 sowie einem Rahmen 5 und einer Nackenstütze 6 zusammen.

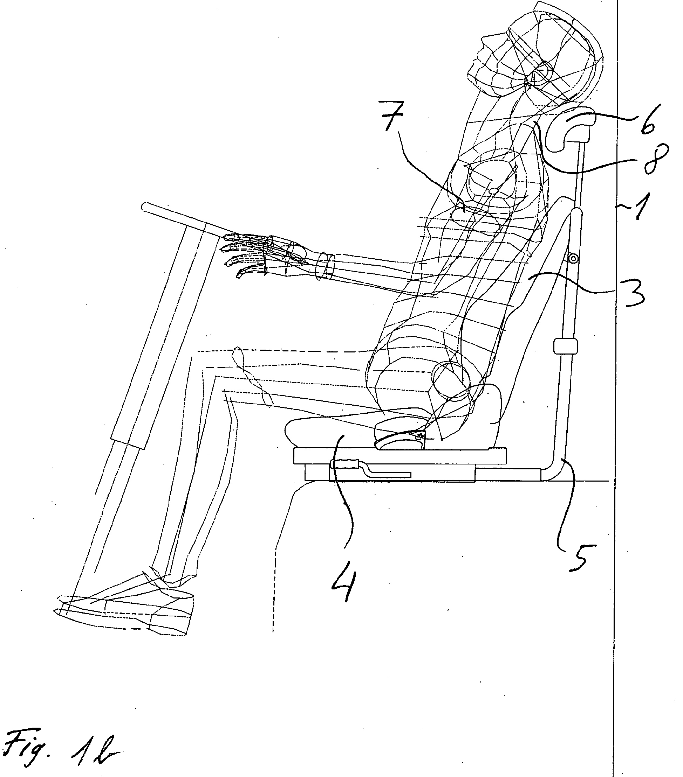

In Fig. 1 b wird in einer Seitenansicht der in Fig. 1a dargestellte Fahrzeugsitz 2 mit geneigter Rückenlehne gezeigt.

Der Rahmen 5 erstreckt sich hinter der Rückenlehne mit einer gegenüber der Vertikalen leicht nach hinten geneigten Ausrichtung bis unterhalb der Sitzplatte 4.

Die Nackenstütze 6 dient zur Stützung des Nackens 8 einer das Stapelfahrzeug bedienenden Person 7.

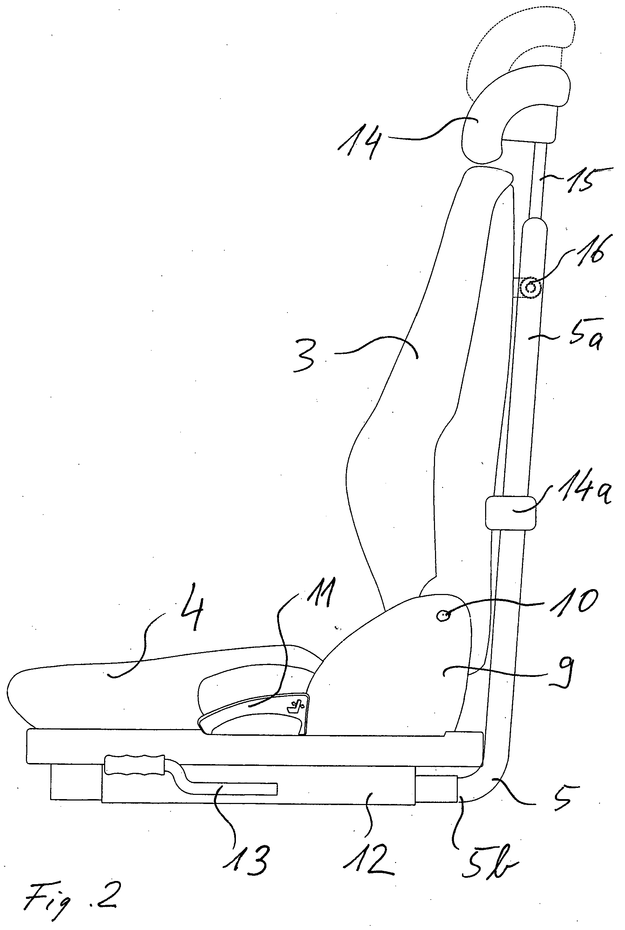

In Fig. 2 wird in einer Seitenansicht der Fahrzeugsitz in ungeneigter Stellung gemäß einer Ausführungsform der Erfindung gezeigt. Dieser Darstellung ist zu entnehmen, dass sich der Rahmen 5 aus einem ersten sich im Wesentlichen vertikal erstreckenden Abschnitt 5a, welcher hinter der Rückenlehne 3 angeordnet ist und einem zweiten mit dem ersten Abschnitt 5a verbundenen Abschnitt 5b zusammensetzt, wobei der zweite Abschnitt 5b unterhalb der Sitzplatte 4 im Wesentlichen horizontal ausgerichtet ist. Der erste Abschnitt 5a ist als U-förmiges Rohr derart ausgebildet, dass er zwei Rohrabschnitte aufweist, die parallel zueinander verlaufend links- und rechtsseitig bezüglich des Fahrzeugsitzes 2 ausgerichtet sind.

Der zweite Abschnitt 5b besteht aus zweiten rohrartigen Abschnitten, die ebenso parallel zueinander verlaufend ausgerichtet sind, und die jeweils ein hier nicht gezeigtes stirnseitiges Ende aufweisen.

Die Rückenlehne 3 und die Sitzplatte 4 sind über Schwenkverbindungselemente 9 derart miteinander verbunden, dass sich die Rückenlehne 3 um eine sich im Wesentlichen horizontal erstreckende Achse 10 frei verschwenken lässt. Mittels eines Betätigungshebels 11 kann die Rückenlehne 3 in eine gewünschte Anfangsschwenkposition geneigt werden, um einen hohen Sitzkomfort auch bei Normalstellung des Fahrzeugsitzes 2 zu erhalten.

Unabhängig von dem Verschwenken der Rückenlehne kann die Sitzplatte 4 mittels zweiten Gleitschienen 12, die an dem Stapelfahrzeug 1 angebracht sind, in Horizontalrichtung verschoben werden, um eine gewünschte Sitzposition des den Fahrzeugsitz 2 benutzenden Fahrers 7 in Abhängigkeit von dessen Beinlänge im Bezug auf in dem Stapelfahrzeug 1 angeordnete Fußpedale zu erhalten. Eine derartige Anfangsverschiebeposition der Sitzplatte 4 wird mittels eines Betätigungshebels 13 durchgeführt.

Eine Nackenstütze 14, die ebenso als Kopfstütze ausgebildet sein kann, ist oberseitig am ersten Abschnitt 5a des Rahmens 5 mittels zweier Stäbe 15 an dem Rahmen 5 angeordnet und kann vorzugsweise um eine Weglänge von 170 mm höhenverstellt werden. Die Höhenverstellung erfolgt über ein Bedienungselement 14a, welches am Rahmen 5 angebracht ist. Von diesem Bedienungselement 14a aus kann eine elektrische Höhenverstellung oder eine mechanische Höhenverstellung, beispielsweise mittels eines im Rohrrahmen angebrachten Seilzugs, erfolgen.

Sämtliche Verstellmöglichkeiten des Fahrzeugsitzes 2, also die Längsverstellung um eine bevorzugte Länge von 200 mm, die Rückenlehnenverstellung und die Nackenstützenverstellung, sind unabhängig voneinander vorabeinstellbar.

Als Verbindungselement zwischen der Rückseite der Rückenlehne 3 und dem ersten Abschnitt 5a des Rahmens 5 ist an der Rückenlehnenrückseite jeweils eine Rolle 16 angeordnet, die auf Gleitschienen an einer Vorderseite des ersten Abschnitts 5a der links- und rechtsseitig verlaufenden Rohrabschnitte abrollbar ist.

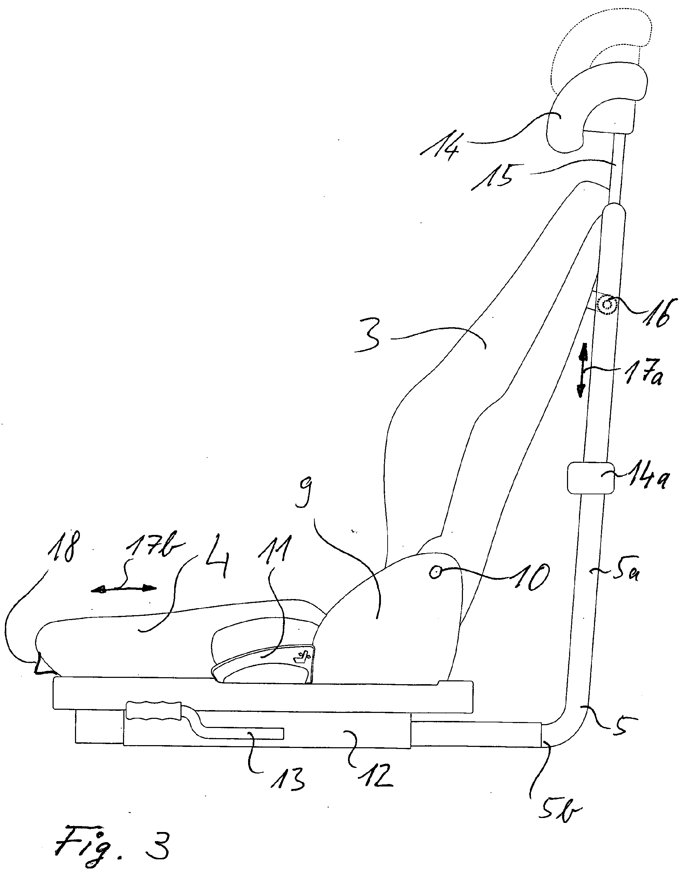

In Fig. 3 wird in einer Seitenansicht der Fahrzeugsitz 2 in geneigter Stellung gemäß der Ausführungsform der Erfindung gezeigt.

Sobald sich eine Synchronbewegung der Rückenlehne 3 und der Sitzplatte 4 zur Einstellung einer gewünschten Neigung der Rückenlehne 3 ergibt, rollen die an der Rückenlehne 3 befestigten Rollen 16 entlang des ersten Abschnittes 5a des Rahmens nach unten und bei Zurückstellen der geneigten Rückenlehne 3 nach oben. Dies wird durch den Doppelpfeil 17a angedeutet.

Zeitgleich mit der Neigungsbewegung der Rückenlehne 3 findet eine Längsverschiebung 17b der Sitzplatte 4 statt. Für eine derartige synchrone Verstellbarkeit von Sitzfläche und Rückenlehne 3 kann beispielsweise ein Verschiebeweg der Sitzplatte 4 von 100 mm in horizontaler Richtung und eine Neigung der Rückenlehne 3 um +10° gegenüber der Vertikalen vorgesehen sein. Eine Rückstellung des Fahrzeugsitzes 2 in seine Normalposition kann federkraftunterstützend durchgeführt werden.

Bei Durchführung einer derartigen Synchronbewegung findet ein Neigen der Rückenlehne 3 durch Wegziehen des unteren Bereiches der Rückenlehne 3 mittels der nach vorne sich verschiebenden Sitzplatte 4 und eine vertikal nach unten gerichtete Rollbewegung des oberen Bereichs der Rückenlehne 3 statt. Mittels eines Betätigungshebels 18 kann die Synchronbewegung arretiert, eingeleitet oder beendet werden.

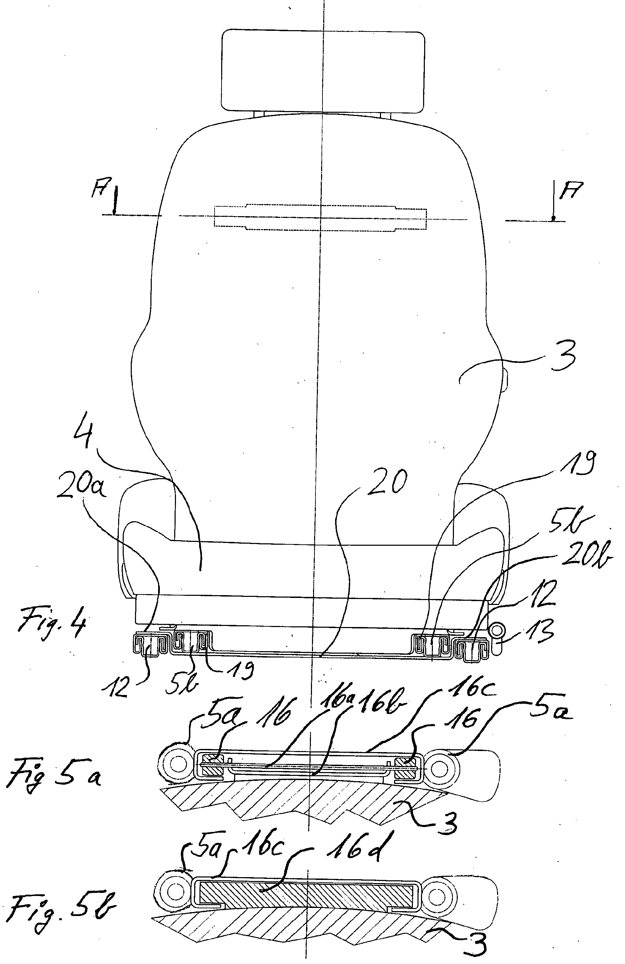

In Fig. 4 wird in einer Vorderansicht ein Ausschnitt des Fahrzeugsitzes 2 gemäß der Ausführungsform der Erfindung gezeigt. Erste Gleitschienen 19 sind an einer Unterseite der Sitzplatte 4 angebracht und bewegen sich gleitend auf den zweiten Rohrrahmenabschnitten 5b des Rahmens 5.

Ein plattenartig ausgebildetes Element 20 trägt die Rohrrahmenabschnitte 5b mit dem gesamten Fahrzeugsitz 2 und ist an seinen links- und rechtsseitigen Randbereichen 20a und 20b derart ausgebildet, dass es die zweiten Gleitschienen 12, welche auf dem Stapelfahrzeug 1 befestigt sind, umfasst. Wenn der Fahrer eine gewünschte Anfangsverschiebeeinstellung des Fahrzeugsitzes 2 wünscht, so wird der gesamte Fahrzeugsitz 2 einschließlich dem Element 20 gegenüber den links- und rechtsseitig angeordneten zweiten Gleitschienen 12 mittels des Betätigungselementes 13 verschoben.

In Fig. 5a wird eine Querschnittsansicht entlang der Linie A- - -A aus Fig. 4 mit einem Verbindungselement gemäß einer Ausführungsform der Erfindung gezeigt. Das Verbindungselement ist als Rollen 16 ausgebildet, die mittels zweier blechartig ausgebildeten Elemente 16a und 16b mit der Rückwand der Rückenlehne 3 verbunden sind. Diese Rollen 16 sind über einen in seinen Seitenbereichen U-förmig ausgebildeten weiten Rahmen 16c mit dem ersten Abschnitt 5a des Rahmens 5 verbunden. Die Rollen können innerhalb der U-förmig ausgebildeten Seitenbereiche des weiteren Rahmen 16c mit wenig Spiel auf- und abwärts bewegt werden.

In Fig. 5b wird in einer Querschnittsansicht entlang der Linie A- - -A aus Fig. 4 das Verbindungselement gemäß einer weitere Ausführungsform der Erfindung gezeigt. Dieser Figur ist zu entnehmen, dass das Verbindungselement nicht als Rollen, sondern als Gleitelement 16d innerhalb des in seinen Seitenbereichen als dritte Gleitschienen U-förmig ausgebildeten Rahmen 16c ausgebildet ist. Der weitere Rahmen 16c ist wiederum mit dem ersten Abschnitt 5a des Rahmens 5 verbunden.

Der Fahrzeugsitz 2 kann optional zusätzlich mit einer Sitzfederung in vertikaler Richtung, einer einfachen manuellen Einstellung des Fahrergewichtes, gut ablesbaren Skalen und - sofern gewünscht - einer automatischen Einstellung des Fahrergewichts bei Luftfederung ausgestattet sein.

### Bezugszeichenliste

- 1: Stapelfahrzeug
- 2: Fahrzeugsitz
- 3: Rückenlehne
- 4: Sitzplatte
- 5: Rahmen
- 5a: erster Abschnitt des Rahmens
- 5b: zweiter Abschnitt des Rahmens
- 6: Nackenstütze
- 7: Fahrer
- 8: Nacken des Fahrers
- 9: Schwenkverbindungselemente
- 10: Achse
- 11, 13, 18: Betätigungselemente
- 12, 19: Gleitschienen
- 14: Nackenstütze
- 14a: Bedienungselement für eine Höhenverstellung der Kopf- oder Nackenstütze
- 15: Stäbe
- 16: Rollen
- 16a, 16b: blechartige ausgebildete Elemente
- 16c: weiterer Rahmen
- 16d: Gleitelement
- 17a: Verschieberichtung der Rückenlehne
- 17b: Verschieberichtung der Sitzplatte
- 20: plattenartig ausgebildetes Element
- 20a, 20b: Randbereiche des plattenartig ausgebildeten Elementes

## Patentansprüche

1. Fahrzeugsitz für Stapelfahrzeuge (1), die einen Hubmast mit einem daran angebrachten auf- und abwärtsbewegbaren Lasttragemittel umfassen, wobei der Fahrzeugsitz (2) eine Sitzplatte (4) und eine neigbare Rückenlehne (3) aufweist,
der Fahrzeugsitz (2) einen vom Stapelfahrzeug lösbaren Rahmen (5) mit einem sich hinter der Rückenlehne (3) im Wesentlichen vertikal erstreckenden ersten Abschnitt (5a) und einen sich unterhalb der Sitzplatte (4) im Wesentlichen horizontal erstreckenden zweiten Abschnitt (5b) aufweist, wobei ein im oberen Bereich der Rückenlehne (3) angeordnetes Verbindungselement (16) an dem ersten Abschnitt (5a) entlang dessen Erstreckungsrichtung (17a) zum Neigen der Rückenlehne (3) verschiebbar gelagert ist und
der zweite Abschnitt (5b) des Rahmens (5) zwei parallel zueinander verlaufende zweite Rohrrahmenabschnitte (5b) aufweist, die mit an dem Stapelfahrzeug (1) angeordneten zweiten Gleitschienen (12) gleitend verbunden sind,
**dadurch gekennzeichnet,dass**
die Sitzplatte (4) mittels mit dem zweiten Abschnitt (5b) verbundenen ersten Gleitschienen (19) zeitgleich mit der Neigungsbewegung der Rückenlehne (3) in horizontaler Richtung (17b) verschiebbar ist und die ersten Gleitschienen (19) an einer Unterseite der Sitzplatte (4) angeordnet sind und gleitend bewegbar auf den zweiten Rohrrahmenabschnitten (5b) des Rahmens (5) sind, wobei die zweiten Rohrrahmenabschnitte (5b) mit dem gesamten Fahrzeugsitz von einem plattenartig ausgebildeten Element (20) getragen sind, welches an seinen links- und rechtsseitigen Randbereichen (20a) und (20b) derart ausgebildet ist, dass die zweiten Gleitschienen (12), welche auf dem Stapelfahrzeug befestigt sind, umfasst sind, und wobei in den Randbereichen (20a, 20b) das plattenartig ausgebildete Element (20) auf den zweiten Gleitschienen (12) aufliegt und außerhalb der Randbereiche (20a, 20b) die ersten Gleitschienen (19) auf dem plattenartigen ausgebildeten Element (20) aufliegen.

2. Fahrzeugsitz nach Anspruch 1,
**dadurch gekennzeichnet,dass**
der erste Abschnitt (5a) als U-förmiger erster Rohrrahmenabschnitt (5a) ausgebildet ist.

3. Fahrzeugsitz nach Anspruch 2,
**dadurch gekennzeichnet,dass**
das Verbindungselement (16) als auf oder in dem ersten Rohrrahmenabschnitt (5a) abrollbare Rollen (16), die an einer Rückseite der Rückenlehne (3) befestigt sind, ausgebildet ist.

4. Fahrzeugsitz nach Anspruch 2,
**dadurch gekennzeichnet,dass** d
as Verbindungselement als Gleitelemente (16d) zum Gleiten innerhalb an dem ersten Abschnitt (5a) angeordneten dritten Gleitschienen ausgebildet ist.

5. Fahrzeugsitz nach einem der vorangegangenen Ansprüche,
**dadurch gekennzeichnet,dass**
die Rückenlehne (3) mittels zwei beidseitig des Fahrzeugsitzes (2) angeordneten Schwenkverbindungselementen (9) schwenkbar gegenüber der Sitzplatte (4) mit dieser verbunden ist.

6. Fahrzeugsitz nach Anspruch 5,
**dadurch gekennzeichnet, dass**
die Schwenkverbindungselemente (9) ein Betätigungselement (11) zum Einstellen einer individuellen Anfangsschwenkposition der Rückenlehne (3) gegenüber der Sitzplatte (4) aufweisen.

## Claims

1. Vehicle seat for forklift trucks (1) which comprise a lifting mast having a load bearing means which is attached thereto and can move upwards and downwards, the vehicle seat (2) comprising a seat plate (4) and an inclinable backrest (3), the vehicle seat (2) comprising a frame (5) which can be removed from the forklift truck and has a first portion (5a) which extends substantially vertically behind the backrest (3) and a second portion (5b) which extends substantially horizontally below the seat plate (4), a connection element (16) arranged in the upper region of the backrest (3) being shiftably mounted on the first portion (5a) in the extension direction (17a) thereof to incline the backrest (3), and the second portion (5b) of the frame (5) comprising two tubular frame portions (5b) which extend in parallel with one another and are slidably connected to second sliding rails (12) arranged on the forklift truck (1),
**characterised in that**
the seat plate (4) can be shifted in a horizontal direction (17b), by means of first sliding rails (19) connected to the second portion (5b), simultaneously to the backrest (3) inclining, and the first sliding rails (19) are arranged on an underside of the seat plate (4) and can slidably move on the second tubular frame portions (5b) of the frame (5), the second tubular frame portions (5b) together with the vehicle seat as a whole being supported by a plate-like element (20) which is formed at its left-hand and right-hand edge regions (20a) and (20b) in such a way that the second sliding rails (12), which are fastened to the forklift truck, are enclosed, and the plate-like element (20) resting on the second sliding rails (12) in the edge regions (20a, 20b) and the first sliding rails (19) resting on the plate-like element (20) outside the edge regions (20a, 20b).

2. Vehicle seat according to claim 1,
**characterised in that**
the first portion (5a) is formed as a U-shaped first tubular frame portion (5a).

3. Vehicle seat according to claim 2,
**characterised in that**
the connection element (16) is formed as rollers (16) which can roll on or in the first tubular frame portion (5a) and are fastened to a rear side of the backrest (3).

4. Vehicle seat according to claim 2,
**characterised in that**
the connection element is formed as sliding elements (16d) for sliding within third sliding rails arranged on the first portion (5a).

5. Vehicle seat according to any of the preceding claims,
**characterised in that**
the backrest (3) is connected to the seat plate (4) so as to be able to swivel relative to said seat plate by means of two swivel connection elements (9) arranged on both sides of the vehicle seat (2).

6. Vehicle seat according to claim 5,
**characterised in that**
the swivel connection elements (9) comprise an operating element (11) for adjusting an individual starting swivel position of the backrest (3) relative to the seat plate (4).

## Revendications

1. Siège de véhicule pour des chariots élévateurs (1) qui comprennent un mât de levage, sur lequel est installé un moyen porteur de charge pouvant être déplacé vers le haut et vers le bas, le siège de véhicule (2) présentant une plaque de siège (4) et un dossier inclinable (3),
le siège de véhicule (2) présentant un cadre (5) pouvant être démonté du chariot élévateur, avec une première section (5a) s'étendant essentiellement à la verticale derrière le dossier (3) et une deuxième section (5b) s'étendant essentiellement à l'horizontale en dessous de la plaque de siège (4), un élément d'assemblage (16) agencé dans la partie supérieure du dossier (3) étant monté de façon déplaçable sur la première section (5a), le long de sa direction d'extension (17a), pour incliner le dossier (3), et
la deuxième section (5b) du cadre (5) présentant deux deuxièmes sections de cadre tubulaires (5b) s'étendant parallèlement l'une à l'autre, qui sont assemblées de façon coulissante avec des deuxièmes glissières (12) agencées sur le chariot élévateur (1), **caractérisé en ce que**
la plaque de siège (4) peut être déplacée dans le sens horizontal (17b) au moyen de premières glissières (19) assemblées avec la deuxième section (5b) en même temps que le mouvement d'inclinaison du dossier (3) et les premières glissières (19) sont agencées sur un côté inférieur de la plaque de siège (4) et peuvent être déplacées de façon coulissante sur les deuxièmes sections de cadre tubulaires (5b) du cadre (5), les deuxièmes sections de cadre tubulaires (5b) étant supportées, avec le siège de véhicule dans son ensemble, par un élément réalisé à la manière d'une plaque (20) qui est réalisé de telle sorte, sur ses zones de bord du côté gauche (20a) et du côté droit (20b), que les deuxièmes glissières (12) qui sont fixées sur le chariot élévateur sont englobées, l'élément semblable à une plaque (20) reposant sur les deuxièmes glissières (12) dans les zones de bord (20a, 20b) et les premières glissières (19) reposant sur l'élément semblable à une plaque (20) en dehors des zones de bord (20a, 20b).

2. Siège de véhicule selon la revendication 1,
**caractérisé en ce que**
la première section (5a) est réalisée en tant que première section de cadre tubulaire en forme de U (5a).

3. Siège de véhicule selon la revendication 2,
**caractérisé en ce que**
l'élément d'assemblage (16) est réalisé en tant que galets (16) pouvant rouler sur ou dans la première section de cadre tubulaire (5a) qui sont fixés sur un côté arrière du dossier (3).

4. Siège de véhicule selon la revendication 2,
**caractérisé en ce que**
l'élément d'assemblage est réalisé en tant qu'éléments coulissants (16d) pour coulisser à l'intérieur de troisièmes glissières agencées au niveau de la première section (5a).

5. Siège de véhicule selon l'une des revendications précédentes,
**caractérisé en ce que**
le dossier (3) est assemblé avec la plaque de siège (4) de façon pivotante par rapport à celle-ci au moyen de deux éléments d'assemblage pivotants (9) agencés des deux côtés du siège de véhicule (2).

6. Siège de véhicule selon la revendication 5,
**caractérisé en ce que**
les éléments d'assemblage pivotants (9) présentent un élément d'actionnement (11) pour régler une position de pivotement initiale individuelle du dossier (3) par rapport à la plaque de siège (4).
